# EUROPEAN PATENT APPLICATION

(11) **EP 4 625 652 A1**
(43) Date of publication of application: **01.10.2025**
(21) Application number: 24214584.5
(22) Date of filing: 21.11.2024
(51) Int. Cl.: H01M 50/213, H01M 50/367, H01M 10/625, H01M 50/244, H01M 50/342, H01M 10/6557, H01M 10/6568, H01M 10/613

(54) **PRESSURE RELIEF STRUCTURE FOR DOUBLE-LAYER BATTERY AND BATTERY PACK**

(30) Priority: 29.03.2024 CN 202420644600 U; 27.08.2024 WO PCT/CN2024/114818
(71) Applicant: Eve Energy Co. Ltd., Huizhou, Guangdong 516000 (CN)
(72) Inventor: Yang, Peng, Huizhou, Guangdong 516000 (CN)
(74) Representative: Michalski Hüttermann & Partner Patentanwälte mbB

(57) **Abstract**

Disclosed is a pressure relief structure for a double-layer battery and a battery pack, including an upper cell module (1) having a plurality of upper cell pressure relief openings (11), a lower cell module (2) having a plurality of lower cell pressure relief openings (21), a pressure relief layer (3) clamped between the upper cell module (1) and the lower cell module (2), in which a pressure relief chamber (33), in communication with the plurality of upper cell pressure relief openings (11) and the plurality of lower cell pressure relief openings (21), is formed within the pressure relief layer (3), and the plurality of upper cell pressure relief openings (11) and the plurality of lower cell pressure relief openings (21) are staggered in position.

## Description

### TECHNICAL FIELD

The present application relates to the technical field of batteries and, particularly, to a pressure relief structure for a double-layer battery and a battery pack.

### BACKGROUND

With the rapid progress of new energy vehicle technology, the performance and space utilization requirements for battery systems as their core components are also becoming increasingly stringent. Especially in SUVs, commercial vehicles and oil-to-electricity models, due to the relatively ample space, how to use this space efficiently to improve the performance of the battery system has become the focus of attention in the industry.

At present, double-layer modules or double-layer MTP (multi-module) battery systems have shown certain application prospects in the market. These systems significantly increase the overall energy density of the battery pack through the stacking of two layers of cells, which in turn enhances the journey range of the vehicle.

### SUMMARY

In a double-layer module design, due to the independent pressure relief chamber existing in each battery module, the efficient use of space is limited to a certain extent. Due to the presence of the double-layer pressure relief chamber, the space utilization of the double-layer module is compressed, resulting in the limited capacity of the cell under the same volume.

How to effectively reduce the space occupied by the pressure relief chamber in the double-layer module under the premise of ensuring the safety of cell pressure relief has become a pressing technical problem that needs to be solved urgently.

In a first aspect, provided in the present application is a pressure relief structure for a double-layer battery, including an upper cell module, a lower cell module, and a pressure relief layer. The upper cell module is provided with a plurality of upper cell pressure relief openings. The lower cell module is provided with a plurality of lower cell pressure relief openings. The pressure relief layer is clamped between the upper cell module and the lower cell module, in which a pressure relief chamber, in communication with the plurality of upper cell pressure relief openings and the plurality of lower cell pressure relief openings, is formed within the pressure relief layer, and the plurality of upper cell pressure relief openings and the plurality of lower cell pressure relief openings are staggered in position.

In a second aspect, provided in the present application is a battery pack, including a battery housing, an explosion-proof valve, an electrical compartment, a liquid cooling system, and one or more pressure relief structures for a double-layer battery. The battery housing is provided with an accommodating chamber. The electrical compartment, the liquid cooling system, the upper cell module, the lower cell module, and the pressure relief layer are all provided in the accommodating chamber. The explosion-proof valve is provided on a sidewall of the battery housing, and the explosion-proof valve is in communication with the pressure relief chamber of the pressure relief layer.

1. The pressure relief layer is provided between the upper cell module and the lower cell module, so that the design of the shared pressure relief chamber structure of the two sets of cells is achieved. When thermal runaway occurs in a cell in the system, gas enters the shared pressure relief chamber to achieve hydraulic pressure. Compared with the structure of a pressure relief chamber set up for each cell module, it saves space and allows for more space to be reserved for the cells in the same volume, thereby increasing the energy density of the battery.

2. The upper cell pressure relief opening and the lower cell pressure relief opening are staggered in position to effectively avoid the risk of gas impacting each other in the event of a cell abnormality. This ensures that the gas can be quickly and effectively discharged without interfering with each other. This greatly reduces the risk of thermal runaway and improves the safety of the battery.

### BRIEF DESCRIPTION OF THE DRAWINGS

Fig. 1 is a simple schematic diagram of the pressure relief structure of an embodiment of the present application;
Fig. 2 is a schematic structural diagram of the pressure relief structure of the embodiment of the present application in a perspective view;
Fig. 3 is a schematic structural diagram of the battery pack of the embodiment of the present application;
Fig. 4 is a schematic structural diagram of the battery pack of the embodiment of the present application in a sectional view;
Fig. 5 is an enlarged view of Fig. 4 at A;
Fig. 6 is a partial disassembly schematic structural diagram of the fixed frame of the pressure relief layer of the embodiment of the present application; and
Fig. 7 is a schematic structural diagram of the liquid cooling system of the embodiment of the present application.

The meanings of the reference numerals are as follows: 1 upper cell module; 11 upper cell pressure relief opening; 2 lower cell module; 21 lower cell pressure relief opening; 3 pressure relief layer; 31 first lateral surface; 32 second lateral surface; 33 pressure relief chamber; 331 first pressure relief chamber; 332 second pressure relief chamber; 34 first partition; 35 support partition; 36 pressure relief channel; 37 pressure relief outlet; 4 first support; 41 first pressure relief through-hole; 5 second support; 51 second pressure relief through-hole; 6 fixed frame; 7 battery housing; 71 accommodating chamber; 72 convergence chamber; 8 explosion-proof valve; 9 liquid cooling system; 91 first liquid cooling mechanism; 911 serpentine liquid cooling plate; 912 current collector; 913 connecting tube; 92 second liquid cooling mechanism; 93 outlet main; 94 inlet main; 10 electrical compartment.

### DETAILED DESCRIPTION

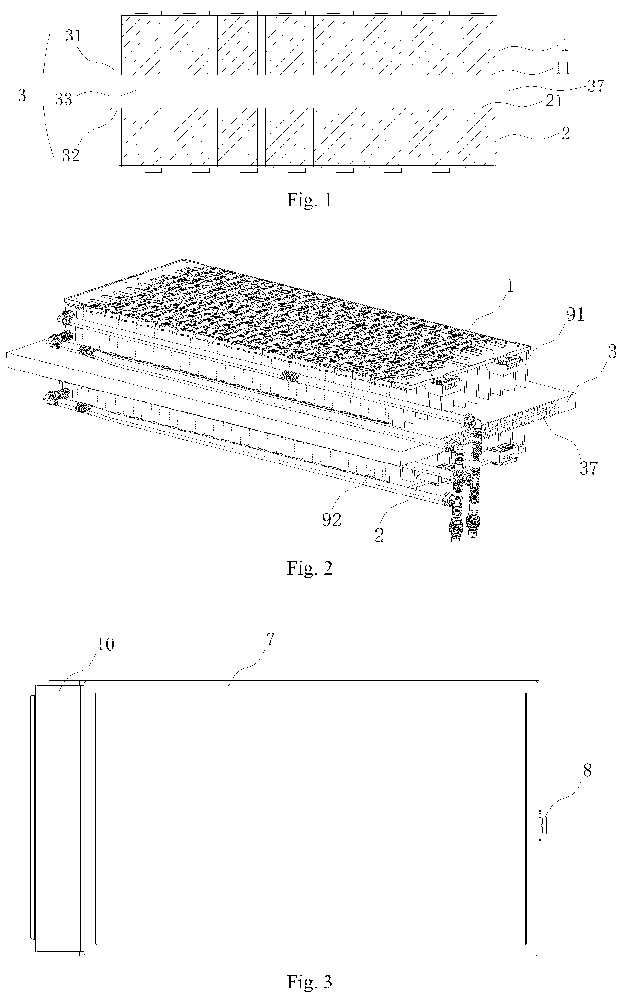

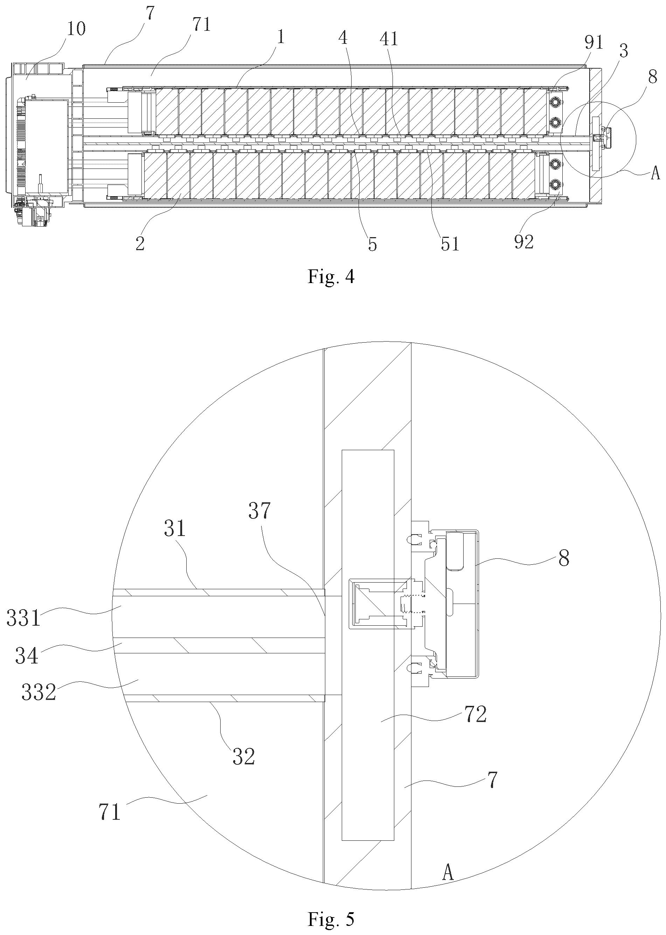

Referring to Figs. 1 and 4, in the embodiment of the present application, disclosed is a pressure relief structure for a double-layer battery, including an upper cell module 1, a lower cell module 2, and a pressure relief layer 3. The upper cell module 1 and the lower cell module 2 each include a bus bar and a plurality of cells, the pressure relief layer 3 includes a first lateral surface 31 and a second lateral surface 32 opposite to the first lateral surface 31, the pressure relief layer 3 is hollow to form a pressure relief chamber 33. The upper cell module 1 is mounted on the first lateral surface 31, and the lower cell module 2 is mounted on the second lateral surface 32 so that the pressure relief layer 3 is clamped between the upper cell module 1 and the lower cell module 2. Each of the cells in the upper cell module 1 has an upper cell pressure relief opening 11 facing the first lateral surface 31; each of the cells in the lower cell module 2 has an upper cell pressure relief opening 11 facing the second lateral surface 32; the upper cell pressure relief opening 11 and the lower cell pressure relief opening 21 are both in communication with the pressure relief chamber 33, and the upper cell pressure relief opening 11 and the lower cell pressure relief opening 21 are staggered in position. By sharing the pressure relief chamber 33 between the upper cell module 1 and the lower cell module 2, the space occupied by the pressure relief chamber 33 in a height direction can be minimized, thereby improving the cell capacity under the same volume. At the same time, since the upper cell pressure relief opening 11 and the lower cell pressure relief opening 21 are staggered in position, it ensures that the gases do not impact each other when the cells are abnormal, but can quickly and effectively enter the pressure relief chamber 33, thus avoiding the occurrence of thermal runaway problems. Such design ensures the safety of the battery system while optimizing space utilization.

In order to avoid the upper cell pressure relief opening 11 and the lower cell pressure relief opening 21 from being disrupted by hot gas when thermal runaway occurs in the cells, in some implementations, referring to Figs. 5 to 6, a first partition 34 is provided in the pressure relief chamber 33, the first partition 34 is parallel to the first lateral surface 31 and the second lateral surface 32, and the first partition 34 divides the pressure relief chamber 33 into a first pressure relief chamber 331 and a second pressure relief chamber 332. The first pressure relief chamber 331 is in communication with the upper cell pressure relief opening 11. The second pressure relief chamber 332 is in communication with the lower cell pressure relief opening 21. The partitioning effect of the first partition 34 allows for more independent and isolated gas release from the upper cell module 1 and the lower cell module 2. The resulting flame or hot gas is not likely to spread directly to the other module, improving the safety of the battery system.

It should be noted that, the plurality of upper cell pressure relief openings 11 and the plurality of lower cell pressure relief openings 21 may not be staggered in position, when the pressure relief chamber 33 is provided with a first partition 34.

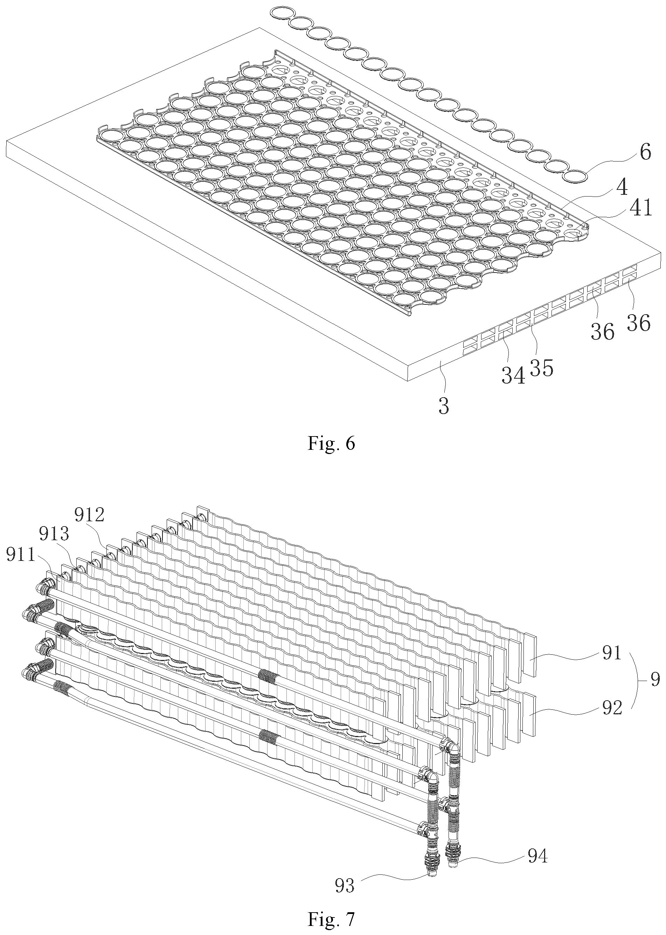

In some implementations, referring to Fig. 6, on the basis of setting the first partition 34, one or more support partitions 35 are also provided in the pressure relief chamber 33 perpendicular to the first partition 34. Specifically, the number of the support partitions 35 equals to the number of cell stack rows minus one, and the support partition 35 and the first partition 34 divide the pressure relief chamber 33 into a plurality of pressure relief channels 36. The setting of the plurality of pressure relief channels 36 achieves the dispersion and discharge of the gas from the battery module, avoiding the problem of poor discharge or blockage that may be caused by a single channel, assisting in improving the discharge efficiency and ensuring the safety performance of the battery system; at the same time, the support partition 35 can provide additional support to prevent the pressure relief chamber 33 from deforming or breaking when subjected to pressure shock, thereby maintaining its structural integrity and stability.

In order to improve the assembly strength and assembly stability of the upper cell module 1, the lower cell module 2 and the pressure relief layer 3, in some implementations, referring to Figs. 4 and 6, a first support 4 is mounted between the upper cell module 1 and the first lateral surface 31, and a second support 5 is mounted between the lower cell module 2 and the second lateral surface 32. In order to ensure that the cells can be properly relieved of pressure, a first pressure relief through-hole 41 is provided on the first support 4 corresponding to the upper cell pressure relief opening 11, and a second pressure relief through-hole 51 is provided on the second support 5 corresponding to the lower cell pressure relief opening 21. The first support 4 and the second support 5 fix the upper cell module 1 and the lower cell module 2 respectively, allowing for a more secure connection between them and the pressure relief layer 3. This improves the efficiency and accuracy of the assembly process and prevents any possible displacement or loosening during battery operation.

In some implementations, referring to Fig. 6, a fixed frame 6 is provided on both the first pressure relief through-hole 41 and the second pressure relief through-hole 51, the fixed frame 6 is configured to fix cells within the upper cell module 1 or the lower cell module 2, so that each of the first pressure relief through-holes 41 and each of the second pressure relief through-holes 51 are corresponding to one of the cells. In some implementations, the fixed frame 6 may be foam, structural adhesive or shock absorber. The fixed frame 6 can ensure that each of the cells is stably fixed on a corresponding position, preventing the cells from displacing or shaking during operation of the battery.

Related in the present application is also a battery pack, an interior thereof may be provided with a plurality of sets of the aforementioned pressure relief structure for double-layer battery, as long as it can ensures that one pressure relief layer 3 is provided between each two of the battery modules. Admittedly, one pressure relief layer 3 may be provided between each two adjacent battery modules, which is not specifically limited in the present application. Specifically, in some implementations, referring to Figs. 3-5, the battery pack also includes a battery housing 7, an explosion-proof valve 8, an electrical compartment 10, and a liquid cooling system 9. The battery housing 7 may be connected by a plurality of structural plates through, but is not limited to, welding, locking or sealing with adhesive. The battery housing 7 is provided with an accommodating chamber 71. The electrical compartment 10, the liquid cooling system 9, the upper cell module 1, the lower cell module 2, and the pressure relief layer 3 are all provided in the accommodating chamber 71, the explosion-proof valve 8 is provided on a sidewall of the battery housing 7, and the explosion-proof valve 8 is in communication with the pressure relief chamber 33 of the pressure relief layer 3. Specifically, the pressure relief layer 3 is provided with one or more pressure relief outlets 37, the one or more pressure relief outlets 37 are in communication with the plurality of pressure relief channels 36. In some implementations, the one or more pressure relief outlets 37 are in communication with an end of the plurality of pressure relief channels 36. The number of the pressure relief outlets 37 is identical to that of the explosion-proof valves 8. In some implementations, it is also possible for a plurality of outlets to be convergent to be in communication with a single explosion-proof valve 8. When thermal runaway or other abnormalities occur in cells, the generated gas and heat may flow rapidly through the pressure relief channel 36 to the pressure relief outlet 37, and be discharged from the pressure relief valve to the outside of the battery housing 7, which assist in preventing the risk of explosion or fire caused by excessive internal pressure in the battery, greatly improving the safety of the battery system.

In some implementations, referring to Fig. 5, a convergence chamber 72 is provided in the battery housing 7, the explosion-proof valve 8 is mounted on an external sidewall of the battery housing 7, the explosion-proof valve 8 is in communication with the convergence chamber 72, the pressure relief layer 3 is mounted on an internal sidewall of the battery housing 7, and the pressure relief outlets 37 on an end of the plurality of pressure relief channels 36 of the pressure relief chamber 33 are all in communication with the convergence chamber 72. The gas in each of the pressure relief channels 36 can flow to the convergence chamber 72. When thermal runaway occurs in the cell and pressure builds up, the gas can quickly pass through the pressure relief channel 36 and enter the convergence chamber 72, and then be discharged outside the battery through the explosion-proof valve 8. The rapid increase in pressure in the convergence chamber 72 facilitates the opening of the explosion-proof valve 8, thereby avoiding dangerous situations such as explosion or thermal runaway of the battery due to excessive pressure.

In some implementations, referring to Fig. 7, the liquid cooling system 9 is provided with a first liquid cooling mechanism 91 corresponding to the upper cell module 1, and a second liquid cooling mechanism 92 corresponding to the lower cell module 2. The first liquid cooling mechanism 91 and the second liquid cooling mechanism 92 both include a plurality of serpentine liquid cooling plates 911, a plurality of current collectors 912, and a plurality of connecting tubes 913. The current collectors 912 are arranged at an end of the serpentine liquid cooling plates 911. The first liquid cooling mechanism 91 and the second liquid cooling mechanism 92 are connected in parallel and in communication with an outlet main 93 and an inlet main 94, so that the connecting tube 913 communicates the plurality of current collectors 912 with the outlet main 93 or the inlet main 94. The serpentine liquid cooling plate 911 is arranged between each row of cells, so that the first liquid cooling mechanism 91 is attached to a side of the cell in the upper cell module 1, and the second liquid cooling mechanism 92 is attached to a side of the cell in the lower cell module 2, which ensures that each cell module can be adequately cooled. At the same time, the first liquid cooling mechanism 91 and the second liquid cooling mechanism 92 are connected in parallel and in communication with an outlet main 93 and an inlet main 94, and such a parallel design can ensure uniform distribution and circulation flow of the coolant, and reduce the system pressure drop. The coolant enters the two liquid cooling mechanisms through the inlet main 94. After cooling the cell module, the coolant flows out through the outlet main 93 to form a complete cooling cycle. The outlet of the outlet main 93 and the inlet main 94 is arranged in the electrical compartment 10. The connectors of the electrical compartment 10 are arranged adjacent to each other, which is conducive to connecting tubes and plugging.

In the present application, when assembling, it is necessary to pre-install the upper cell module 1 and the lower cell module 2. The pre-installation includes stacking and connecting the cells to a CCS, cell contact system, and then preparing a battery housing 7 that can be opened at the top and the bottom. The battery housing 7 is equipped with a pressure relief layer 3 in the center, and the battery housing 7 can be injection molded integrally with the pressure relief layer 3 or may be assembled later. Then, The upper cell module 1 is attached to the first lateral surface 31 of the pressure relief layer 3 in the accommodating chamber 71 of the battery housing 7 through a vacuum sucker, and then a suitable amount of foam adhesive is injected to cover the top of the battery housing 7. After the foam adhesive has cured, the battery housing 7 is turned over so that the bottom of the housing is on the top. Then, the lower cell module 2 is attached to the second lateral surface 32 of the pressure relief layer 3 in the accommodating chamber 71 of the battery housing 7, a suitable amount of foam adhesive is injected to cover the top cover of the battery housing 7, and finally the BMS, battery management system, BDU, battery disconnect unit, and plug-in parts are mounted in the electrical compartment 10 of the battery pack, and then the cover of the electrical compartment 7 can be closed.

In summary, the pressure relief structure for double-layer battery provided in the present application has the technical effects as follows.
1. The pressure relief layer 3 is provided between the upper cell module 1 and the lower cell module 2, so that the design of the shared pressure relief chamber 33 structure of the two sets of cells is achieved. When thermal runaway occurs in a cell in the system, gas enters the shared pressure relief chamber 33 to achieve hydraulic pressure. Compared with the structure of a pressure relief chamber 33 set up for each cell module, it saves space and allows for more space to be reserved for the cells in the same volume, thereby increasing the energy density of the battery.
2. The upper cell pressure relief opening 11 and the lower cell pressure relief opening 21 are staggered in position to effectively avoid the risk of gas impacting each other in the event of a cell abnormality. This ensures that the gas can be quickly and effectively discharged without interfering with each other. This greatly reduces the risk of thermal runaway and improves the safety of the battery.
3. The first partition 34 and the support partition 35 are designed in such a way that the pressure relief chamber 33 is divided into multiple independent pressure relief channels 36. During battery operation, especially when an abnormality occurs in a cell, large pressure fluctuations may occur inside the cell. The support partition 35 can provide additional support to prevent the pressure relief chamber 33 from deforming or rupturing when subjected to pressure impact, thereby maintaining its structural integrity and stability. When thermal runaway occurs in the cell, multiple channels can more effectively disperse and discharge heat, reduce the temperature inside the cell, and reduce the risk of thermal runaway diffusion. This assists in protecting the rest of the battery system against chain reactions.
4. The first support 4 and the second support 5, as well as the fixed frame 6, are arranged so as to ensure a secure connection between the cell module and the pressure relief layer 3. This not only improves the structural stability of the battery, but also assists in preventing the cells from displacing or shaking during battery operation, enhancing battery safety.

## Claims

1. A pressure relief structure for a double-layer battery, comprising:
an upper cell module (1), provided with a plurality of upper cell pressure relief openings (11);
a lower cell module (2), provided with a plurality of lower cell pressure relief openings (21);
a pressure relief layer (3), clamped between the upper cell module (1) and the lower cell module (2), wherein a pressure relief chamber (33), in communication with the plurality of upper cell pressure relief openings (11) and the plurality of lower cell pressure relief openings (21), is formed within the pressure relief layer (3), and
the plurality of upper cell pressure relief openings (11) and the plurality of lower cell pressure relief openings (21) are staggered in position.

2. The pressure relief structure for the double-layer battery according to claim 1, wherein the pressure relief layer (3) comprises a first lateral surface (31) opposite to the upper cell pressure relief openings (11) and a second lateral surface (32) opposite to the lower cell pressure relief openings (21), a first partition (34) parallel to the first lateral surface (31) and the second lateral surface (32) is provided in the pressure relief chamber (33), the first partition (34) divides the pressure relief chamber (33) into a first pressure relief chamber (331) and a second pressure relief chamber (332), the first pressure relief chamber (331) is in communication with the upper cell pressure relief openings (11), and the second pressure relief chamber (332) is in communication with the lower cell pressure relief openings (21).

3. The pressure relief structure for the double-layer battery according to claim 2, wherein one or more support partitions (35) perpendicular to the first partition (34) are provided in the pressure relief chamber (33), and the support partition (35) and the first partition (34) divide the pressure relief chamber (33) into a plurality of pressure relief channels (36).

4. The pressure relief structure for double-layer battery according to claim 3, wherein the pressure relief layer (3) is provided with one or more pressure relief outlets (37), and the one or more pressure relief outlets (37) are in communication with the plurality of pressure relief channels (36).

5. The pressure relief structure for the double-layer battery according to any one of claims 2-4, wherein a first support (4) is mounted between the upper cell module (1) and the first lateral surface (31) and is provided with first pressure relief through-holes (41) corresponding to the upper cell pressure relief openings (11); and
a second support (5) is mounted between the lower cell module (2) and the second lateral surface (32) and is provided with second pressure relief through-holes (51) corresponding to the lower cell pressure relief openings (21).

6. The pressure relief structure for the double-layer battery according to claim 5, wherein a fixed frame (6) is provided on both the first pressure relief through-hole (41) and the second pressure relief through-hole (51), the fixed frame (6) is configured to fix cells within the upper cell module (1) or the lower cell module (2), so that each of the first pressure relief through-holes (41) and each of the second pressure relief through-holes (51) are corresponding to each of the cells, respectively.

7. A battery pack, comprising a battery housing (7), an explosion-proof valve (8), an electrical compartment (10), a liquid cooling system (9), and one or more pressure relief structures for a double-layer battery according to any one of claims 1-6, wherein the battery housing (7) is provided with an accommodating chamber (71), wherein the electrical compartment (10), the liquid cooling system (9), the upper cell module (1), the lower cell module (2), and the pressure relief layer (3) are all provided in the accommodating chamber (71), the explosion-proof valve (8) is provided on a sidewall of the battery housing (7), and the explosion-proof valve (8) is in communication with the pressure relief chamber (33) of the pressure relief layer (3).

8. The battery pack according to claim 7, wherein a convergence chamber (72) is provided in the battery housing (7), the explosion-proof valve (8) is mounted on an external sidewall of the battery housing (7), the explosion-proof valve (8) is in communication with the convergence chamber (72), the pressure relief layer (3) is mounted on an internal sidewall of the battery housing (7), and the plurality of pressure relief channels (36) of the pressure relief chamber (33) are all in communication with the convergence chamber (72).

9. The battery pack according to claim 7, wherein the liquid cooling system (9) comprises:
a first liquid cooling mechanism (91), abutted against the upper cell module (1);
a second liquid cooling mechanism (92), abutted against the lower cell module (2),
wherein the first liquid cooling mechanism (91) and the second liquid cooling mechanism (92) are connected in parallel, and are in communication with an outlet main (93) and an inlet main (94).

10. The battery pack according to claim 9, wherein any one of the first liquid cooling mechanism (91) and the second liquid cooling mechanism (92) comprises:
a plurality of serpentine liquid cooling plates (911);
a plurality of current collectors (912), provided on an end of the plurality of serpentine liquid cooling plates (911); and
a connecting tube (913), configured to communicate the plurality of current collectors (912) with the outlet main (93) or the inlet main (94).
